# EUROPEAN PATENT APPLICATION

(11) **EP 2 323 435 A1**
(43) Date of publication of application: **18.05.2011**
(21) Application number: 09809965.8
(22) Date of filing: 27.08.2009
(51) Int. Cl.: H04W 24/08, H04J 11/00, H04W 72/04, H04W 88/02

(54) **MOBILE COMMUNICATION METHOD, MOBILE COMMUNICATION SYSTEM, AND RADIO BASE STATION**

(30) Priority: 27.08.2008 JP 2008218514
(71) Applicant: NTT DOCOMO, INC., Chiyoda-ku Tokyo 100-6150 (JP)
(72) Inventor: SUZUKI, Mototsugu, Chiyoda-ku, Tokyo 100-6150 (JP); IMAI, Tetsurou, Chiyoda-ku, Tokyo 100-6150 (JP); KITAO, Koushirou, Chiyoda-ku, Tokyo 100-6150 (JP); ISHIKAWA, Yoshikiro, Chiyoda-ku, Tokyo 100-6150 (JP)
(74) Representative: HOFFMANN EITLE
(86) International application number: PCT/JP2009/064925
(87) International publication number: WO 2010/024315

(57) **Abstract**

A mobile communication method includes: a step in which a neighboring radio base station eNB#A stops transmission of signals other than a predetermined signal in a predetermined subframe within a predetermined frequency band; a step in which a measurement target radio base station eNB#B changes the transmission frequency or the transmission timing of a pilot symbol not to overlap with the transmission frequency and the transmission timing of the predetermined signal; and a step in which a mobile station UE measures the reception quality of the pilot symbol transmitted by the measurement target radio base station eNB#B.

## Description

### TECHNICAL FIELD

The present invention relates to a mobile communication method, a mobile communication system and a radio base station with which a measurement target radio base station and a neighboring radio base station transmit multiple pilot symbols on predetermined timings within a predetermined subframe in predetermined frequencies within a predetermined frequency band.

### BACKGROUND OF THE INVENTION

An LTE (Long Term Evolution) mobile communication system is configured to design an optimum service area of a radio base station eNB according to the reception quality of a reference signal (RS) from the radio base station eNB in a mobile station UE.

### SUMMARY OF THE INVENTION

### PROBLEM TO BE SOLVED BY THE INVENTION

However, there has been a problem that, in a case as where a radio base station eNB#A and a radio base station eNB#B are placed close to each other and where the mobile station UE is present near the radio base station eNB#A, the mobile station UE cannot accurately measure a reference signal from the radio base station eNB#B due to a signal from the radio base station eNB#A.

The present invention has been made in consideration of the foregoing problem. It is an objective of the present invention to provide a mobile communication method, a mobile communication system and a radio base station which allow a mobile station to accurately measure a pilot symbol transmitted by a measurement target radio base station even if multiple radio base stations are set up close to each other.

### MEANS FOR SOLVING THE PROBLEMS

A first feature of the present invention is summarized as a mobile communication method for allowing a measurement target radio base station and a neighboring radio base station to transmit a plurality of pilot symbols on predetermined timings within a predetermined subframe in predetermined frequencies within a predetermined frequency band, the method comprising the steps of: stopping, by the neighboring radio base station, transmission of signals other than a predetermined signal in the predetermined subframe within the predetermined frequency band; changing, by the measurement target radio base station, the transmission frequencies or the transmission timings of the pilot symbols so that the transmission frequencies and the transmission timings of the pilot symbols do not overlap with the transmission a frequency and a transmission timing of the predetermined signal; and measuring, by the mobile station, reception quality of the pilot symbols transmitted by the measurement target radio base station.

A second feature of the present invention is summarized as a mobile communication method for allowing a measurement target radio base station and a neighboring radio base station to transmit a plurality of pilot symbols on predetermined timings within a predetermined subframe in predetermined frequencies within a predetermined frequency band, the method comprising the steps of:
transmitting, by the measurement target radio base station, the pilot symbols on a predetermined number of consecutive timings within the predetermined subframe in at least one of the predetermined frequencies within the predetermined frequency band or on at least one of the predetermined timings within the predetermined subframe in a predetermined number of consecutive frequencies within the predetermined frequency band; and
measuring, by the mobile station, reception quality of the pilot symbols transmitted by the measurement target radio base station.

A third feature of the present invention is summarized as a mobile communication method for allowing a measurement target radio base station and a neighboring radio base station to transmit a plurality of pilot symbols on predetermined timings within a predetermined subframe in all frequencies within a predetermined frequency band, the method comprising the steps of: transmitting, by the measurement target radio base station, the pilot symbols on a predetermined number of consecutive timings within the predetermined subframe in a predetermined number of consecutive frequencies within the predetermined frequency band; and measuring, by the mobile station, reception quality of the pilot symbols transmitted by the measurement target radio base station.

A fourth feature of the present invention is summarized as a mobile communication system in which a measurement target radio base station and a neighboring radio base station are configured to transmit a plurality of pilot symbols on predetermined timings within a predetermined subframe in predetermined frequencies within a predetermined frequency band, wherein the neighboring radio base station is configured to stop transmission of signals other than a predetermined signal in the predetermined subframe within the predetermined frequency band, and the measurement target radio base station is configured to change the transmission frequencies or the transmission timings of the pilot symbols so that the transmission frequencies and the transmission timings of the pilot symbols do not overlap with the a transmission frequency and a transmission timing of the predetermined signal.

A fifth feature of the present invention is summarized as a radio base station in a mobile communication system in which a measurement target radio base station and a neighboring radio base station are configured to transmit a plurality of pilot symbols on predetermined timings within a predetermined subframe in predetermined frequencies within a predetermined frequency band, the radio base station serving as the measurement target radio base station, wherein the radio base station is configured to transmit the pilot symbols on a predetermined number of consecutive timings within the predetermined subframe in at least one of the predetermined frequencies within the predetermined frequency band or on at least one of the predetermined timings within the predetermined subframe in a predetermined number of consecutive frequencies within the predetermined frequency band.

A sixth feature of the present invention is summarized as a radio base station in a mobile communication system in which a measurement target radio base station and a neighboring radio base station are configured to transmit a plurality of pilot symbols on predetermined timings within a predetermined subframe in predetermined frequencies within a predetermined frequency band, the radio base station serving as the measurement target radio base station, wherein the radio base station is configured to transmit the pilot symbols on a predetermined number of consecutive timings within the predetermined subframe in a predetermined number of consecutive frequencies within the predetermined frequency band.

### EFFECTS OF THE INVENTION

As described above, the present invention can provide a mobile communication method, a mobile communication system and a radio base station which allow a mobile station to accurately measure a pilot symbol transmitted by a measurement target radio base station even if multiple radio base stations are set up close to each other.

### BRIEF DESCRIPTION OF THE DRAWINGS

Fig. 1 is an overall configuration diagram of a mobile communication system according to a first embodiment of the present invention.
Fig. 2 is a functional block diagram of a measurement target radio base station according to the first embodiment of the present invention.
Fig. 3 is a diagram for explaining a method for transmitting a reference signal by a radio base station in the mobile communication system according to the first embodiment of the present invention.
Fig. 4 is a functional block diagram of a mobile station according to the first embodiment of the present invention.
Fig. 5 is a flowchart showing operations of the mobile communication system according to the first embodiment of the present invention.
Fig. 6 is a diagram for explaining parameter setting or area adjustment in the mobile communication system according to the first embodiment of the present invention.
Fig. 7 is a diagram for explaining a method for transmitting a reference signal by a radio base station in a mobile communication system according to Modified Example 1 of the present invention.
Fig. 8 is a flowchart showing operations of the mobile communication system according to Modified Example 1 of the present invention.
Fig. 9 is a diagram for explaining a method for transmitting a reference signal by a radio base station in a mobile communication system according to Modified Example 2 of the present invention.
Fig. 10 is a flowchart showing operations of the mobile communication system according to Modified Example 2 of the present invention.

### EMBODIMENTS FOR CARRYING OUT THE INVENTION

### (Configuration of Mobile Communication System According to First Embodiment of the Invention)

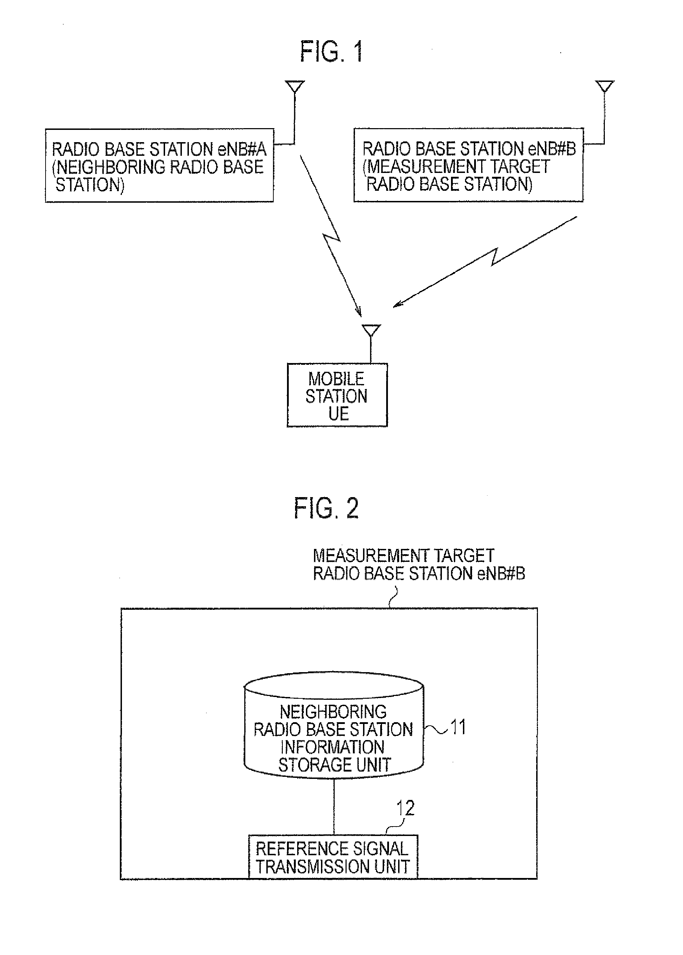

With reference to Figs. 1 to 4, a configuration of a mobile communication system according to a first embodiment of the present invention is described.

As shown in Fig. 1, the mobile communication system according to this embodiment is an LTE mobile communication system, including a radio base station eNB#A, a radio base station eNB#B and a mobile station UE.

In this embodiment, the radio base station eNB#B is a measurement target radio base station whose reference signal (pilot symbol) is to be measured in the mobile station UE, while the radio base station eNB#A is a neighboring radio base station placed close to the radio base station eNB#B.

Here, assume that a signal transmitted on predetermined timings within a predetermined subframe in predetermined frequencies within a predetermined frequency band by the radio base station eNB#A has an influence, such as interference, on a reference signal transmitted on the predetermined timings within a predetermined subframe in the predetermined frequencies within the predetermined frequency band by the radio base station eNB#B.

Note that although only the radio base station eNB#A is placed as the neighboring radio base station in the example shown in Fig. 1, the present invention is not limited to this case but is applicable to the case where multiple neighboring radio base stations are placed.

As shown in Fig. 2, the measurement target radio base station eNB#B includes a neighboring radio base station information storage unit 11 and a reference signal transmission unit 12.

The neighboring radio base station information storage unit 11 is configured to store information on the neighboring radio base station (e.g., the radio base station eNB#A) close to the measurement target radio base station eNB#B.

For example, the neighboring radio base station information storage unit 11 is configured to store the transmission frequencies and transmission timings of a predetermined signal in the neighboring radio base station, as the information on the neighboring radio base station.

Here, the predetermined signal is a signal which is transmitted on predetermined timings within a predetermined subframe in predetermined frequencies within a predetermined frequency band, and includes multiple pilot symbols or control signal symbols.

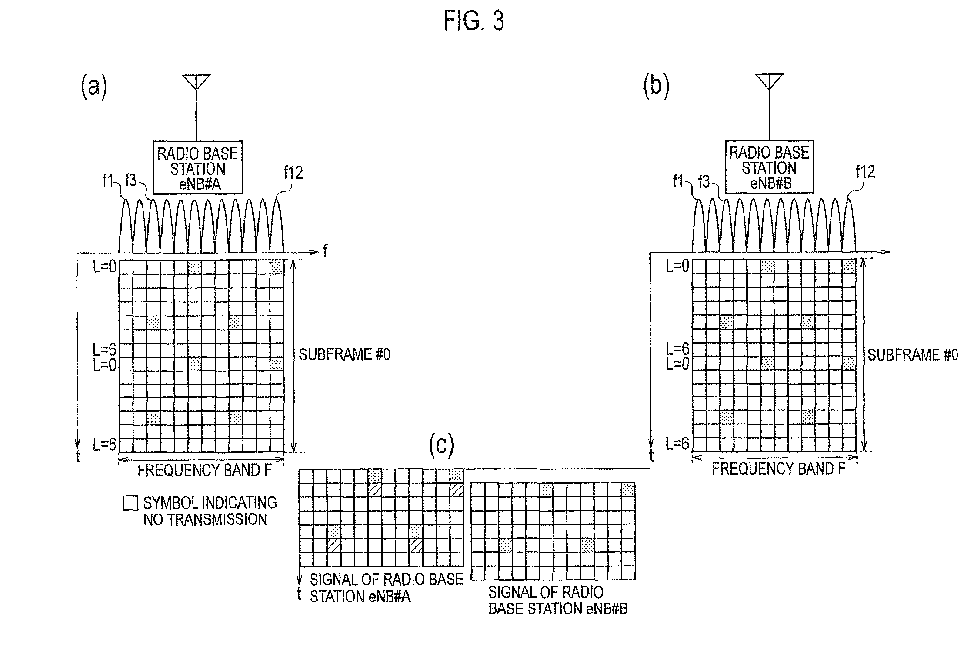

As shown in Fig. 3 (a), for example, pilot symbols constituting the predetermined signal are configured to be transmitted on a transmission timing #0 and the like in the first half part of a subframe #0 at a frequency f3 within a frequency band F.

Note that each neighboring radio base station is configured to stop transmission of signals other than the predetermined signal (specifically, symbols constituting the signals other than the predetermined signal) within a predetermined subframe within a predetermined frequency band upon receipt of a predetermined instruction from a predetermined device (e.g., an operator device) in the mobile communication system according to this embodiment.

The reference signal transmission unit 12 is configured to transmit a reference signal (specifically, pilot symbols constituting the reference signal) on the predetermined timings within the predetermined subframe in the predetermined frequencies within the predetermined frequency band described above.

That is, the reference signal transmission unit 12 is configured to transmit a reference signal on the same transmission frequencies and transmission timings as those of the predetermined signal in the neighboring radio base station under a normal condition.

However, the reference signal transmission unit 12 is configured to change the transmission frequencies or the transmission timings of the reference signal (specifically, the pilot symbols constituting the reference signal) so that they do not overlap with the transmission frequencies and transmission timings of the predetermined signal in the neighboring radio base station, when a predetermined instruction is received from the predetermined device (e.g., the operator device) in the mobile communication system according to this embodiment, i.e., when measurement of the reference signal from the measurement target radio base station eNB#B by the mobile station UE is started.

For example, as shown in Figs. 3 (a) and 3 (b), under the normal condition, the transmission frequencies and transmission timings of pilot symbols in the neighboring radio base station eNB#A overlap with the transmission frequency and transmission timings of pilot symbols in the measurement target radio base station eNB#B.

However, when a predetermined instruction is received from the predetermined device (e.g., the operator device) in the mobile communication system according to this embodiment, the transmission frequencies and transmission timings of pilot symbols in the measurement target radio base station eNB#B are shifted by one symbol (or one to six symbols) in a time axis direction from the transmission frequencies and transmission timings of pilot symbols in the neighboring radio base station eNB#A, as shown in Fig. 3 (c).

Note that when the predetermined instruction is received from the predetermined device (e.g., the operator device) in the mobile communication system according to this embodiment, the transmission frequencies and transmission timings of pilot symbols in the measurement target radio base station eNB#B may be configured to be shifted by a predetermined number of symbols in a frequency axis direction or in both of the frequency axis direction and the time axis direction from the transmission frequencies and transmission timings of pilot symbols in the neighboring radio base station eNB#A.

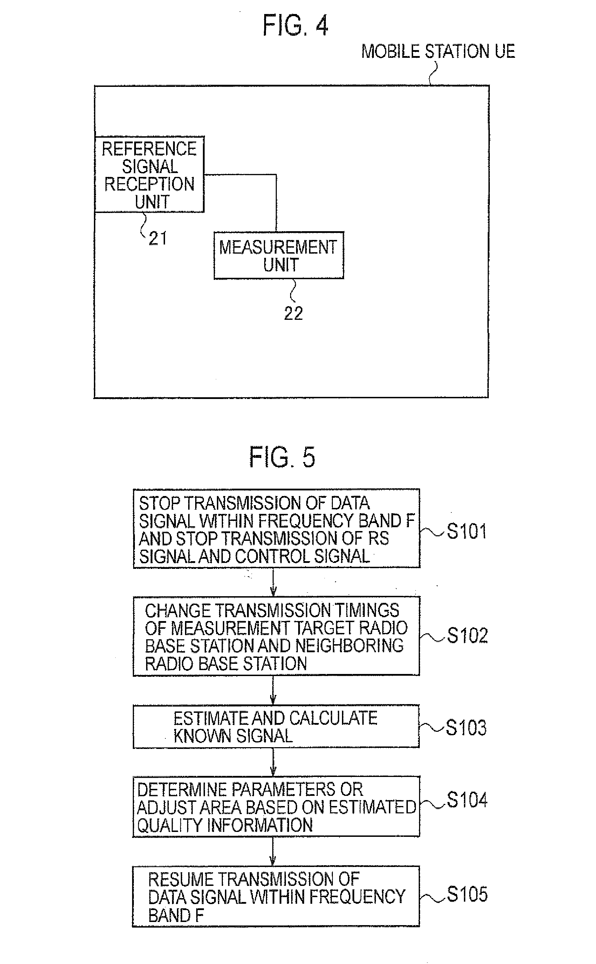

As shown in Fig. 4, the mobile station UE includes a reference signal reception unit 21 and a measurement unit 22.

The reference signal reception unit 21 is configured to receive the reference signal (the pilot symbols constituting the reference signal) transmitted from the measurement target radio base station eNB#B.

Note that the reference signal reception unit 21 previously stores the transmission frequencies and transmission timings of the reference signal in the measurement target radio base station eNB#B under the normal condition.

Moreover, the reference signal reception unit 21 may previously store the transmission frequencies and transmission timings of the reference signal during the measurement of the reference signal from the measurement target radio base station eNB#B by the mobile station UE, or may be notified thereof by the predetermined device (e.g., the operator device) in the mobile communication system according to this embodiment or the measurement target radio base station eNB#B.

That is, the reference signal reception unit 21 is configured to determine the transmission frequencies and transmission timings of the reference signal based on the presence or absence of the instruction from the predetermined device (e.g., the operator device) in the mobile communication system according to this embodiment or the measurement target radio base station eNB#B.

The measurement unit 22 is configured to measure the reception quality of the reference signal received by the reference signal reception unit 21.

### (Operations of Mobile Communication System According to First embodiment of the Invention)

With reference to Fig. 5, operations of the mobile communication system according to the first embodiment of the present invention are described.

As shown in Fig. 5, in Step S101, upon receipt of a predetermined instruction, from the predetermined device described above, instructing the mobile station UE to start the measurement of the reference signal from the measurement target radio base station eNB#B, the neighboring radio base station eNB#A stops the transmission of signals other than the predetermined signal (e.g., data signals) in the predetermined subframe within the predetermined frequency band.

In Step S102, upon receipt of the predetermined instruction described above, the measurement target radio base station eNB#B changes the transmission frequencies or the transmission timings of the reference signal so that they do not overlap with the transmission frequencies and transmission timings of the predetermined signal in the neighboring radio base station eNB#A in the predetermined subframe within the predetermined frequency band.

In Step S103, the mobile station UE receives the reference signal from the measurement target radio base station eNB#B, and measures the reception quality of the reference signal.

In Step S104, an operator adjusts parameters of the neighboring radio base station eNB#A and the measurement target radio base station eNB#B based on the reception quality of the reference signal measured by the mobile station UE, thereby adjusting service areas of the neighboring radio base station eNB#A or the measurement target radio base station eNB#B.

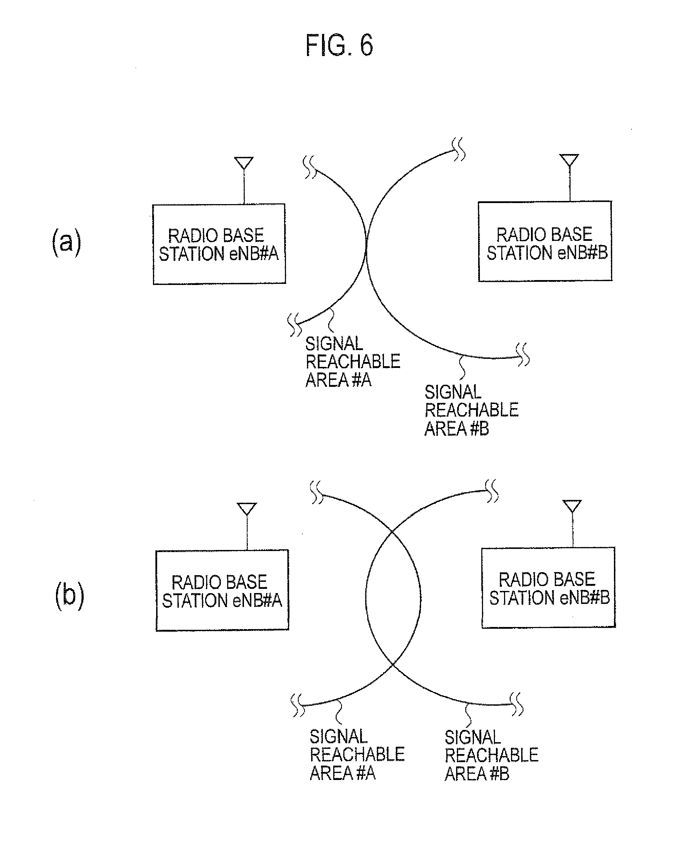

To be more specific, by adjusting the parameters of the neighboring radio base station eNB#A and the measurement target radio base station eNB#B, the operator adjusts a state where the service area (signal reachable area) #A of the neighboring radio base station eNB#A and the service area (signal reachable area) #B of the measurement target radio base station eNB#B overlap with each other as shown in Fig. 6 (b) to a state where the service area (signal reachable area) #A of the neighboring radio base station eNB#A and the service area (signal reachable area) #B of the measurement target radio base station eNB#B do not overlap with each other as shown in Fig. 6 (a).

In Step S105, the neighboring radio base station eNB#A resumes the transmission of signals other than the predetermined signal (e.g., data signals) in the predetermined subframe within the predetermined frequency band described above, when notified by the predetermined device described above, the measurement target radio base station eNB#B, the mobile station UE or the like that the measurement of the reference signal from the measurement target radio base station eNB#B by the mobile station UE is completed.

### (Advantageous Effects of Mobile Communication System According to First Embodiment of the Invention)

In the mobile communication system according to the first embodiment of the present invention, when the mobile station UE measures the reference signal from the measurement target radio base station eNB#B, the neighboring radio base station eNB#A does not transmit signals other than the predetermined signal (e.g., data signals), and the measurement target radio base station eNB#B changes the transmission frequencies or the transmission timings of the reference signal so that they do not overlap with the transmission frequencies and transmission timings of the predetermined signal in the neighboring radio base station eNB#A. Thus, the mobile station UE can accurately measure the reception quality of the reference signal (the pilot symbols constituting the reference signal) from the measurement target radio base station eNB#B without being affected by interference caused by the signal from the neighboring radio base station eNB#A.

### (Modified Example 1)

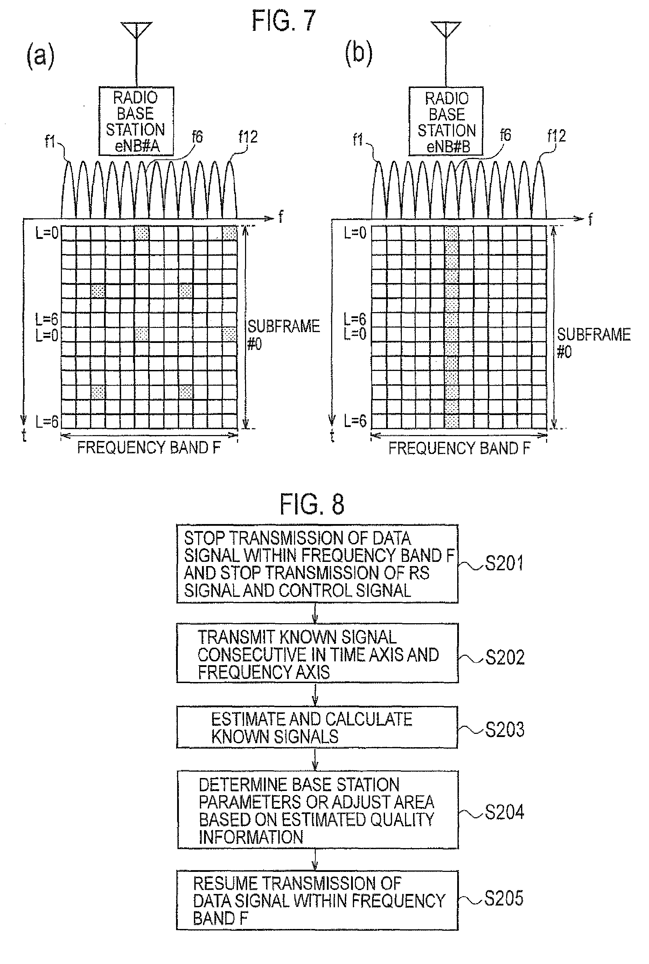

With reference to Figs. 7 and 8, a mobile communication system according to Modified Example 1 of the present invention is described. Hereinafter, the mobile communication system according to Modified Example 1 is described while focusing on differences from the mobile communication system according to the first embodiment of the present invention.

A reference signal transmission unit 12 of a measurement target radio base station eNB#B is configured to transmit pilot symbols constituting a reference signal on a predetermined number of consecutive timings within a predetermined subframe in at least one of the predetermined frequencies within the predetermined frequency band described above.

For example, as shown in Figs. 7 (a) and 7 (b), the reference signal transmission unit 12 may be configured to transmit the pilot symbols constituting the reference signal on all the timings within the subframe #0 in the frequency f6 within the frequency band F.

Here, the reference signal transmission unit 12 may be configured to transmit the pilot symbols constituting the reference signal on all the timings within the subframe #0 in the frequency which is not used for transmission of a predetermined signal in a neighboring radio base station.

Alternatively, the reference signal transmission unit 12 may be configured to transmit the pilot symbols constituting the reference signal on at least one of the predetermined timings within a predetermined subframe in a predetermined number of consecutive frequencies within the predetermined frequency band described above.

In Figs. 7 (a) and 7 (b), for example, the reference signal transmission unit 12 may be configured to transmit the pilot symbols constituting the reference signal on the timing #0 or the like in the transmission timing #0 in the first half part of the subframe #0 in all the frequencies f1 to f12 within the frequency band F.

Here, the reference signal transmission unit 12 may be configured to transmit the pilot symbols constituting the reference signal on the timing which is not used for transmission of the predetermined signal of the neighboring radio base station within the subframe #0 in all the frequencies f1 to f12 within the frequency band F.

Furthermore, in this Modified Example 1, since there is a high correlation among the pilot symbols received by the reference signal reception unit 21 of the mobile station UE, the measurement unit 22 of the mobile station UE may be configured to measure the reception quality of the reference signal by calculating the average of pilot symbols consecutive in the frequency axis direction or the time axis direction.

Next, with reference to Fig. 8, operations of the mobile communication system according to this Modified Example 1 are described.

As shown in Fig. 8, in Step S201, upon receipt of a predetermined instruction, from the predetermined device described above, instructing the mobile station UE to start measurement of the reference signal from the measurement target radio base station eNB#B, the neighboring radio base station eNB#A stops the transmission of signals other than the predetermined signal (e.g., data signals) in the predetermined subframe within the predetermined frequency band.

In Step S202, upon receipt of the predetermined instruction described above, the measurement target radio base station eNB#B transmits the pilot symbols constituting the reference signal on all the timings within the subframe #0 in the frequency f6 within the frequency band F or on the timing #0 in the transmission timing #0 in the first half part of the subframe #0 in all the frequencies f1 to f12 within the frequency band F.

The operations of subsequent Steps S203 to S205 are the same as those of Steps S103 to S105 shown in Fig. 5 described above.

In the mobile communication system according to Modified Example 1, when the mobile station UE measures the reference signal from the measurement target radio base station eNB#B, the neighboring radio base station eNB#A does not transmit signals other than the predetermined signal (e.g., data signals), and the transmission frequencies and the transmission timings of the reference signal in the measurement target radio base station eNB#B do not, at least partially, overlap with the transmission frequencies and the transmission timings of the predetermined signal in the neighboring radio base station eNB#A, Thus, the mobile station UE can accurately measure the reception quality of the pilot symbols transmitted on the frequencies and timings which do not overlap with the transmission frequencies and the transmission timings of the predetermined signal in the neighboring radio base station eNB#A.

### (Modified Example 2)

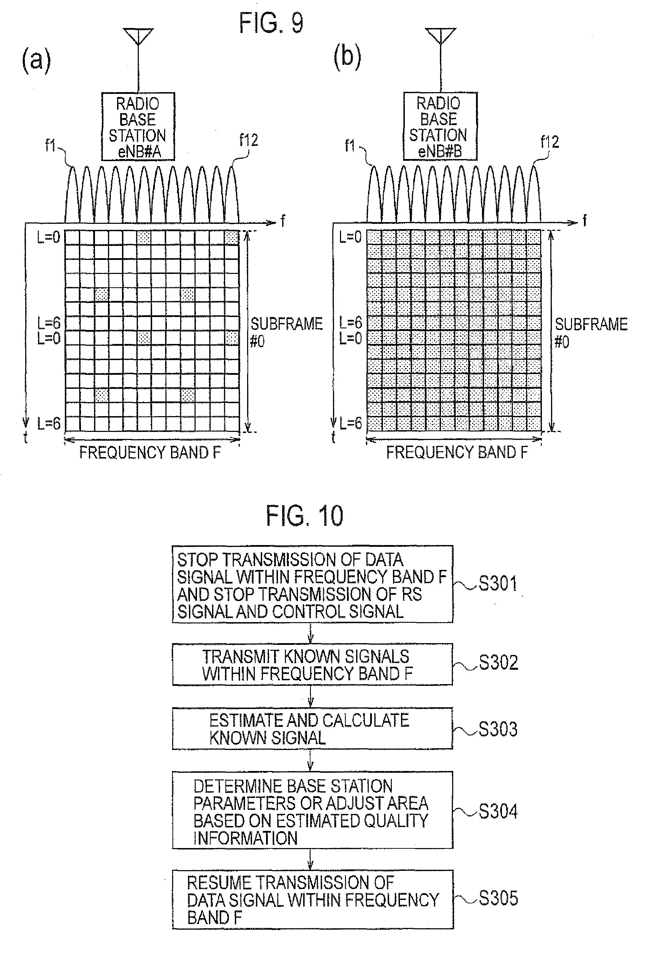

With reference to Figs. 9 and 10, a mobile communication system according to Modified Example 2 of the present invention is described. Hereinafter, the mobile communication system according to Modified Example 2 is described while focusing on differences from the mobile communication system according to the first embodiment of the present invention.

A reference signal transmission unit 12 of a measurement target radio base station eNB#B is configured to transmit pilot symbols constituting a reference signal on a predetermined number of consecutive timings within a predetermined subframe in a predetermined number of consecutive frequencies within the predetermined frequency band described above.

For example, as shown in Figs. 9 (a) and 9 (b), the reference signal transmission unit 12 may be configured to transmit the pilot symbols constituting the reference signal on all the timings (#0 to #6 in the first half part and #0 to #6 in the second half part) within the subframe #0 in all the frequencies f1 to f12 within the frequency band F.

Furthermore, in this Modified Example 2, since there is a high correlation among the pilot symbols received by the reference signal reception unit 21 of the mobile station UE, the measurement unit 22 of the mobile station UE may be configured to measure the reception quality of the reference signal by calculating the average of pilot symbols consecutive in the frequency axis direction or the time axis direction.

Next, with reference to Fig. 10, operations of the mobile communication system according to this Modified Example 2 are described.

As shown in Fig. 10, in Step S301, upon receipt of a predetermined instruction, from the predetermined device described above, instructing the mobile station UE to start measurement of the reference signal from the measurement target radio base station eNB#B, the neighboring radio base station eNB#A stops the transmission of signals other than the predetermined signal (e.g., data signals) in the predetermined subframe within the predetermined frequency band.

In Step S302, upon receipt of the predetermined instruction described above, the measurement target radio base station eNB#B transmits the pilot symbols constituting the reference signal on all the timings within the subframe #0 in all the frequencies f1 to f12 within the frequency band F.

The operations of subsequent Steps S303 to S305 are the same as those of Steps S103 to S105 shown in Fig. 5 described above.

In the mobile communication system according to Modified Example 2, when the mobile station UE measures the reference signal from the measurement target radio base station eNB#B, the neighboring radio base station eNB#A does not transmit signals other than the predetermined signal (e.g., data signals), and the transmission frequencies and the transmission timings of the reference signal in the measurement target radio base station eNB#B do not, at least partially, overlap with the transmission frequencies and the transmission timings of the predetermined signal in the neighboring radio base station eNB#A. Thus, the mobile station UE can accurately measure the reception quality of the pilot symbols transmitted on the frequencies and timings which do not overlap with the transmission frequencies and the transmission timings of the predetermined signal in the neighboring radio base station eNB#A.

Note that the above described operations of the radio base station eNB and the mobile station UE may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB and the mobile station UE. Also, the storage medium and the processor may be provided in the radio base station eNB and the mobile station UE as a discrete component.

Hereinabove, the present invention has been described in detail by use of the foregoing embodiment. It is obvious, however, to those skilled in the art that the present invention should not be limited to the embodiment described in this description. The present invention is implementable as modified and improved embodiments without departing from the sprit and the scope of the present invention defined by the description of the scope of the appended claims. Therefore, the explanation of this description is intended only to explain an illustrative example of the present invention, and is not intended to impose any limitation on the present invention.

## Claims

1. A mobile communication method for allowing a measurement target radio base station and a neighboring radio base station to transmit a plurality of pilot symbols on predetermined timings within a predetermined subframe in predetermined frequencies within a predetermined frequency band, the method comprising the steps of:
stopping, by the neighboring radio base station, transmission of signals other than a predetermined signal in the predetermined subframe within the predetermined frequency band;
changing, by the measurement target radio base station, the transmission frequencies or the transmission timings of the pilot symbols so that the transmission frequencies and the transmission timings of the pilot symbols do not overlap with the transmission a frequency and a transmission timing of the predetermined signal; and
measuring, by the mobile station, reception quality of the pilot symbols transmitted by the measurement target radio base station.

2. A mobile communication method for allowing a measurement target radio base station and a neighboring radio base station to transmit a plurality of pilot symbols on predetermined timings within a predetermined subframe in predetermined frequencies within a predetermined frequency band, the method comprising the steps of:
transmitting, by the measurement target radio base station, the pilot symbols on a predetermined number of consecutive timings within the predetermined subframe in at least one of the predetermined frequencies within the predetermined frequency band or on at least one of the predetermined timings within the predetermined subframe in a predetermined number of consecutive frequencies within the predetermined frequency band; and
measuring, by the mobile station, reception quality of the pilot symbols transmitted by the measurement target radio base station.

3. A mobile communication method for allowing a measurement target radio base station and a neighboring radio base station to transmit a plurality of pilot symbols on predetermined timings within a predetermined subframe in all frequencies within a predetermined frequency band, the method comprising the steps of:
transmitting, by the measurement target radio base station, the pilot symbols on a predetermined number of consecutive timings within the predetermined subframe in a predetermined number of consecutive frequencies within the predetermined frequency band; and
measuring, by the mobile station, reception quality of the pilot symbols transmitted by the measurement target radio base station.

4. A mobile communication system in which a measurement target radio base station and a neighboring radio base station are configured to transmit a plurality of pilot symbols on predetermined timings within a predetermined subframe in predetermined frequencies within a predetermined frequency band, wherein
the neighboring radio base station is configured to stop transmission of signals other than a predetermined signal in the predetermined subframe within the predetermined frequency band, and
the measurement target radio base station is configured to change the transmission frequencies or the transmission timings of the pilot symbols so that the transmission frequencies and the transmission timings of the pilot symbols do not overlap with the a transmission frequency and a transmission timing of the predetermined signal.

5. A radio base station in a mobile communication system in which a measurement target radio base station and a neighboring radio base station are configured to transmit a plurality of pilot symbols on predetermined timings within a predetermined subframe in predetermined frequencies within a predetermined frequency band, the radio base station serving as the measurement target radio base station, wherein
the radio base station is configured to transmit the pilot symbols on a predetermined number of consecutive timings within the predetermined subframe in at least one of the predetermined frequencies within the predetermined frequency band or on at least one of the predetermined timings within the predetermined subframe in a predetermined number of consecutive frequencies within the predetermined frequency band.

6. A radio base station in a mobile communication system in which a measurement target radio base station and a neighboring radio base station are configured to transmit a plurality of pilot symbols on predetermined timings within a predetermined subframe in predetermined frequencies within a predetermined frequency band, the radio base station serving as the measurement target radio base station, wherein
the radio base station is configured to transmit the pilot symbols on a predetermined number of consecutive timings within the predetermined subframe in a predetermined number of consecutive frequencies within the predetermined frequency band.
